# EUROPEAN PATENT SPECIFICATION

(11) **EP 3 828 078 B1**
(45) Date of publication and mention of the grant of the patent: **31.07.2024**
(21) Application number: 20210487.3
(22) Date of filing: 27.11.2020
(51) Int. Cl.: B64C 23/06, B64D 15/16, B64D 33/02, F02C 7/047

(54) **GAS TURBINE ENGINE, NACELLE THEREOF, AND ASSOCIATED METHOD OF OPERATING A GAS TURBINE ENGINE**
GASTURBINENTRIEBWERK, DESSEN TRIEBWERKSGONDEL UND VERFAHREN ZUM BETRIEB EINES GASTURBINENTRIEBWERKS
MOTEUR À TURBINE À GAZ, SA NACELLE ET PROCÉDÉ ASSOCIÉ POUR LE FONCTIONNEMENT D'UN MOTEUR DE TURBINE À GAZ

(30) Priority: 28.11.2019 US 201916699001
(43) Date of publication of application: 02.06.2021
(73) Proprietor: Pratt & Whitney Canada Corp., Longueuil, Québec J4G 1A1 (CA)
(72) Inventor: TETRAULT, Philippe-Andre, Longueuil, Québec J4G 1A1 (CA)
(74) Representative: Dehns

(56) References cited:
- GB-A- 2 518 232
- US-A- 5 322 246
- US-A1- 2014 263 837
- US-A1- 2016 052 621

## Description

### TECHNICAL FIELD

The application relates generally to turbofan engines and, more particularly, to ice mitigation systems therefor.

### BACKGROUND OF THE ART

This engine nacelle skins, which are exposed to the environment, may be subject to ice accumulation. In the case of engine nacelles, ice accumulation in the vicinity of the inlet can be particularly undesirable as accumulating ice can eventually separate from the surface and represent a source of foreign object damage (FOD). To mitigate ice accumulation to the inlet portion of engine nacelles, it was known to provide heating within the nacelle, such as via hotter air bled from the compressor for instance. Although known systems were satisfactory to a certain extent, there always remains room for improvement, such as in reducing the amount of heat required to achieve the intended purpose for instance.

US 2016/052621 A1 discloses energy efficient improvements for turbomachinery, US 2014/263837 A1 discloses a nacelle inlet thermal anti-ice spray duct, and US 5 322 246 A discloses an ice prevention device for airfoils.

### SUMMARY

In one aspect, there is provided a turbofan engine nacelle as set forth in claim 1.

In an embodiment of the above, the step has a height of between 0,254 mm (0.010") and 5,08 mm (0.200") measured normal to the surface.

In a further embodiment of any of the above, the step has a riser.

In a further embodiment of any of the above, the duct wall is an outer bypass duct wall.

In a further embodiment of any of the above, the D-duct connects the skin and the duct wall.

In a further embodiment of any of the above, the step is formed at a junction between the D-duct and the duct wall.

In a further embodiment of any of the above, a heating air conduit is provided inside the D-duct, the heating air conduit having a plurality of heating air outlets, and being connected to a compressor bleed air source.

In a further embodiment of any of the above, the inner duct wall has an acoustic panel, the step being located along the surface, between the inlet edge and the acoustic panel.

In a further embodiment of any of the above, the step is formed in the duct wall.

In a further embodiment of any of the above, the aircraft engine further comprises an other step formed in the skin, the other step delimiting a recessed portion of the skin, the recessed portion of the skin extending away from both the other step and the inlet edge.

In a further embodiment of any of the above, the inlet edge, skin and duct are annular.

In a further embodiment of any of the above, the step is backward facing.

In another aspect, there is provided a method of operating a gas turbine engine as set forth in claim 13.

In an embodiment of the above, the method further comprises subjecting water in solid state to heating, and thereby transforming the water in solid state into the water droplets.

In a further embodiments of any of the above, the method further comprises directing the detached water droplets into one of an engine core main gas path, or a bypass duct.

### DESCRIPTION OF THE DRAWINGS

Reference is now made to the accompanying figures in which:
Fig.1 is a schematic cross-sectional view of a gas turbine engine;
Fig.2A shows an inlet portion of a nacelle of the gas turbine engine of Fig. 1;
Fig. 2B is a portion 2B-2B of Fig. 2A, shown enlarged;
Fig. 2C is a portion 2C-2C of Fig. 2A, shown enlarged; and
Fig. 3 is a heating system of the engine of Fig. 1.

### DETAILED DESCRIPTION

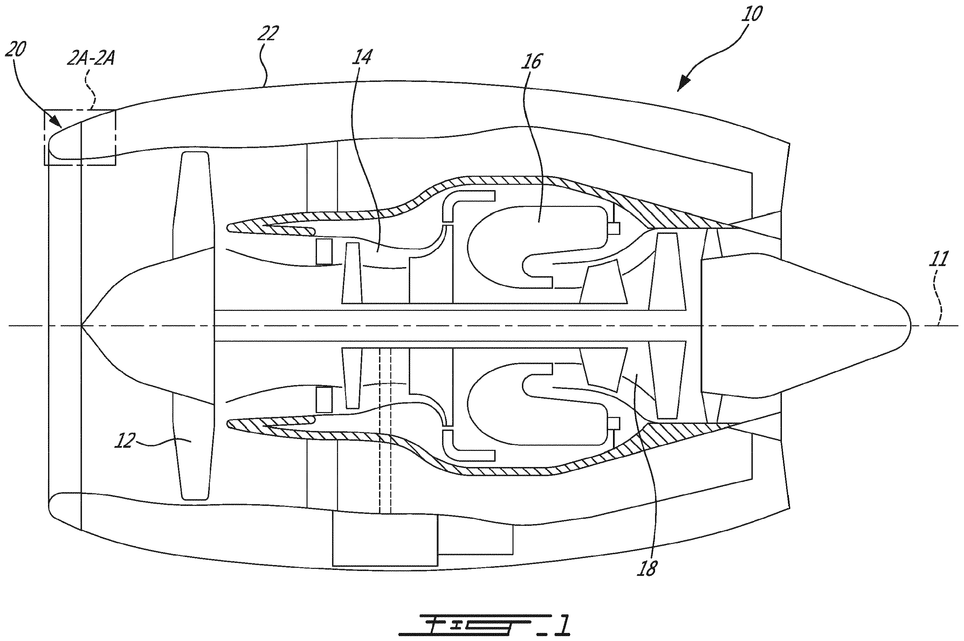

Fig. 1 illustrates a gas turbine engine 10 of a type preferably provided for use in subsonic flight, generally comprising in serial flow communication an inlet 20, a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases, with rotary components rotating around a main axis 11. The gas turbine engine 10 is housed in a nacelle 22, which has an aerodynamically shaped external surface. In this example, the nacelle 22 forms an enclosure which is distinct from the passenger compartment of the aircraft, and more specifically, the nacelle 22 is separated from the passenger compartment by a portion of a wing of the aircraft (not shown).

Gas turbine engines 10 typically have a main gas path extending through the compressor section 14, combustor 16 and turbine section 18. Turbofan engines have a bypass path formed around the core engine, within the nacelle 22. In any case, the inlet fluidly communicates with the main gas path, and in this case, it also communicates with the bypass path. The shape of the nacelle 22 depends on the type of engine and is typically selected in a manner to accommodate the specifics of the engine.

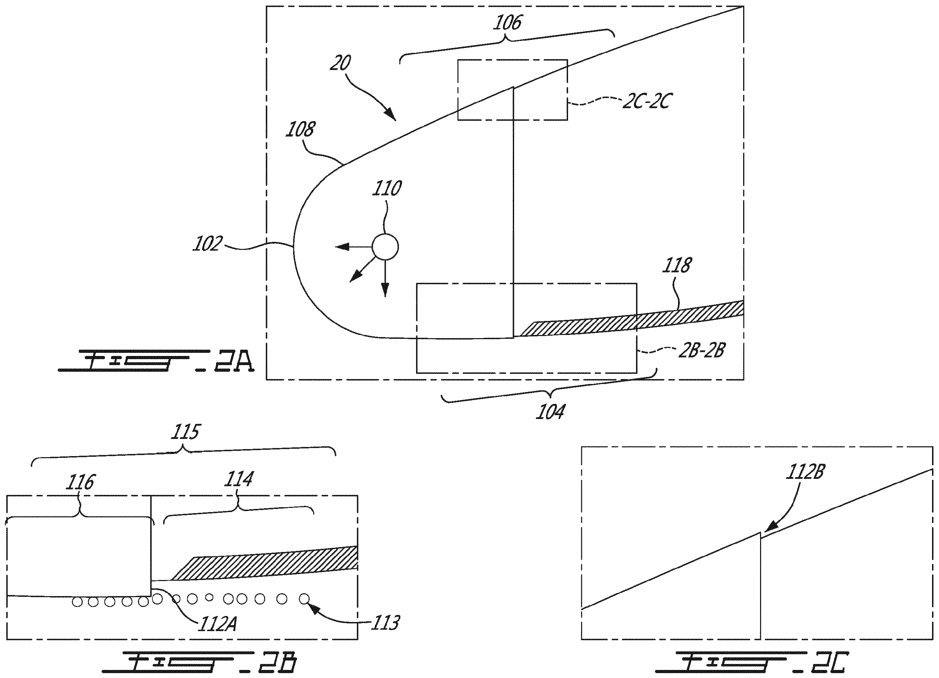

An inlet portion 20 of an example nacelle 22 is shown enlarged in Fig. 2A. In this example, the inlet portion 20 has an inlet edge 102 which, during flight, separates a portion of the flow which is directed into the engine 10, a sub-portion of which will flow along an internal duct wall 104 of the engine 10, from a portion of the flow which is directed around the nacelle 22, a sub-portion of which will flow along an external skin 106 of the nacelle 22. In this embodiment, the inlet edge is rounded.

The example inlet portion 20 is provided with a heater internal to the rounded portion 108. The heater can be a heating air conduit 110 having a plurality of apertures dissipating hotter air bled from the compressor, for instance, or any suitable heater. The heater can be used to heat water, in solid or liquid phase, which comes into contact with the inlet portion 20, to avoid it forming and accumulating a layer of ice, which could eventually dislodge and represent a potential FOD. The power directed to the heater can be modulated as a function of the amount of power expected to be required to achieve this purpose, for instance.

However, the heater has a limited range, and even if, for a given power, it can avoid ice accumulation within its range, liquid water circulating along the surface can eventually exit its range and form an ice accumulation downstream of its range. To avoid this, the range of the heater can be extended, to a certain extent, by supplying additional power (hotter water will travel further before freezing, especially if it runs along a warmer surface), but this is done at the cost of the additional power, which is typically undesired. Moreover, some embodiments may have practical limitations to the amount of extension of heater range achievable by added power.

Fig. 2B presents an example embodiment where a step 112A is provided in the surface 115 along which the liquid water circulates, in a manner that as the liquid water droplets 113 reach the edge of the step 112A, its velocity, entrained by the air velocity and viscosity, entrains its separation, and ejection, from the surface 115, after which it can remain entrained in the air flow rather than freezing and accumulating onto a cooler portion of the surface, to eventually detach and cause FOD. Indeed, small droplets of water, even when solidified into small ice fragments, can have insufficient mass to cause any damage to the engine, by contrast with larger ice accumulations.

More specifically, in the example presented in Fig. 2B, the step 112A is formed in the duct wall 104 of the gas turbine engine 10, in the vicinity of the inlet edge 102. The step 112A can be said to form a discontinuity in the surface 115, or to more specifically delimit a recessed (or second) portion 114 of the surface 115 from a non-recessed (or first) portion 116 of the surface 115. The recessed portion 114 of the surface 115 is offset, at the step 112A, from the non-recessed portion 116 of the surface 115 by a distance equivalent to the "height" of the step 112A. The recessed portion 114 is recessed relative to the air flow. The step 112A faces downstream relative to the movement of the water along the surface, in the sense that if an imaginary Lilliputian person would walk and go up the step, he would be walking against the wind flow, whereas if he would walk and go down the step, he would have the wind in its back. Otherwise said, the recessed portion 114 extends from the step 112A both away from the step 112A and the rounded portion 102, whereas the non-recessed portion 116 extends between the rounded portion 102 and the step 112A.

The height of the step 112A can vary greatly depending on the size of the engine and the specifics of the embodiment. However, for the purpose of providing an order of magnitude, it can be said here that the height of the step 112A can be expected to be between 0.254 mm (0.010") and 5.08 mm (0.200") in most practical applications. Greater heights may represent a flow distortion judged as being too large, while not providing sufficient compensating advantages, whereas a height smaller than 0.254 mm (0.010") may not be sufficient to cause ejection of the water droplets 113. The exact height for a specific application can be determined based on simulation or testing, for instance. Similarly, the sharpness of the step, i.e. the dimension of the fillet radius of the edge of the step, can vary greatly from one embodiment to another and can be chosen in view of optimizing the efficiency of a specific embodiment. Typically, the ratio of the fillet radius to the height of the step can be between 0 and 1, and the fillet radius can thus be less than 5.08 mm (0.200"), for example.

In the specific embodiment illustrated in Fig. 2B, the step 112A has a riser in the form of a riser portion of the surface, which extends normal to the recessed portion 114 of the surface 115, along a distance corresponding to the height of the step 112A. The riser faces downstream relative to the movement of the water droplets 113, or in this specific embodiment, rearwardly relative to the orientation of thrust of the turbofan engine.

Providing a step 112A along the bypass duct wall of the turbofan engine, as opposed to along the nacelle skin, can be particularly useful in avoiding ice accumulation which would be likely to otherwise form a potential source of FOD. Indeed, ice accumulating on the nacelle skin 106 will typically not represent a potential source of FOD during flight, however it can still be undesired for other reasons. It will be noted that the flow dynamics during takeoff are very different than during flight, hence if ice has accumulated on a nacelle skin 106 on a previous flight and remains in the vicinity of the inlet, a sufficient velocity of air may be drawn forwardly along the skin, towards the inlet, during the next takeoff, causing detachment of the ice accumulation and a FOD. Accordingly, several reasons may motivate the use of a backward facing step 112B on the external skin 106 of the nacelle 22 in addition to, or perhaps even instead of, a step 112A on the internal duct wall 104. This backward facing step 112B on the external skin 106 can be used to eject water running along the surface during flight, prevent the ejected water from freezing and forming an ice accumulation during flight, and thus prevent eventual aspiration of such an ice accumulation by a reverse flow occurring during takeoff, for instance.

Fig. 2C shows an example of a nacelle inlet 20 having a step 112B formed on the external skin 106 on the nacelle 22.

It will be understood that the inlet 20 of the turbofan gas turbine engine extends annularly around the engine's main axis 11, and therefore the inlet edge 102, skin 106, and duct wall 104 can be axisymmetric around the main axis 11. The step extends around the entire circumference of the inlet 20.

The duct wall 104 is an outer bypass duct wall of the turbofan gas turbine engine.

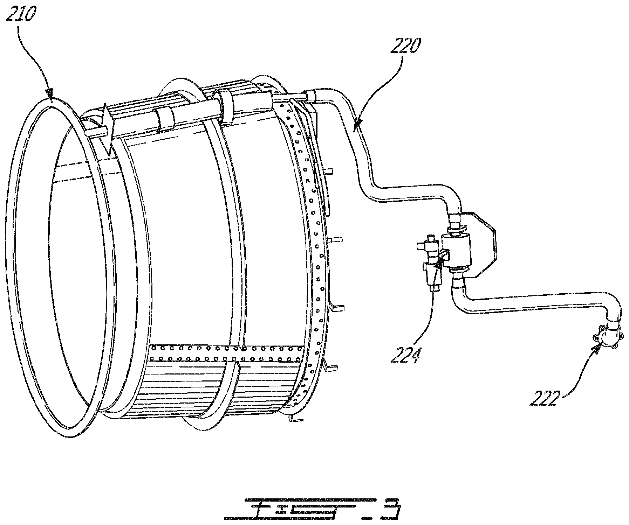

Returning to the illustrated example, the inlet edge 102 forms part of a D-duct 108 connected to a remainder of the nacelle 22, or bypass duct, as known in the art, and the heating conduit 110 can extend circumferentially within the D-duct 108, for instance. The step is formed by, the junction between the D-duct 108 and adjacent sections of the nacelle 22. The heating conduit 110 can have a plurality of apertures forming heating air outlets, and be connected to a compressor to receive bleed air therefrom. An example of a possible arrangement is shown in Fig. 3, where the annular heating conduit 210 is shown to be connected, via a thermally insulated pipe segment 220, to an engine bleed port 222, and such an arrangement can have a pressure regulating and shut-off valve (PRSOV) 224 associated with the thermally insulated pipe segment 220, for instance.

Returning to Figs. 2A and 2B, and the specific context of a turbofan engine, it is common for turbofan engines to have outer bypass ducts integrating acoustic panels 118 in a manner to impede sound transmission from the core engine to the passengers. In such a scenario, the step 112A can be located between the inlet edge 102, and the acoustic panel 118, for instance.

## Claims

1. A turbofan engine nacelle (22) comprising an inlet (20) configured to be fluidly connected to a main gas path of a turbofan engine core, wherein:
the inlet (20) has an inlet edge (102) connecting an external skin (106) to an internal duct wall (104), and a step (112A) formed in a surface (115) of at least one of the external skin (106) and the duct wall (104), the step (112A) delimiting a first portion (116) of the surface (115) from a second portion (114) of the surface (115), the second portion (114) of the surface (115) being recessed relative to the first portion (116) of the surface (115) by the height of the step (112A);
the second portion (114) of the surface (115) extends away from both the step (112A) and the inlet edge (102);
the first portion (116) of the surface (115) extends between the inlet edge (102) and the step (112A);
the step (112A) extends around an entire circumference of the inlet (20);
**characterized in that** :
the step is formed by a junction between a D-duct (108) and adjacent sections of the nacelle (22); and
the turbofan engine nacelle (22) further comprises a heater internal to the D-duct (108), the heater being configured to heat water, in solid or liquid phase, which comes in contact with the inlet (20).

2. The turbofan engine nacelle (22) of claim 1, wherein the height of the step (112A) is between 0.254 mm (0.010") and 5.08 mm (0.200") measured normal to the surface (115).

3. The turbofan engine nacelle (22) of claim 1 or 2, wherein the step (112A) has a riser.

4. The turbofan engine nacelle (22) of any preceding claim, wherein the duct wall (104) is an outer bypass duct wall.

5. The turbofan engine nacelle (22) of any preceding claim, wherein the D-duct (108) connects the skin (106) and the duct wall (104).

6. The turbofan engine nacelle (22) of claim 5, wherein the step (112A) is formed at a junction between the D-duct (108) and the duct wall (104).

7. The turbofan engine nacelle (22) of claim 4 or 5, wherein the heater is a heating air conduit (110) provided inside the D-duct (108), the heating air conduit (110) having a plurality of heating air outlets, and being connected to a compressor bleed air source.

8. The turbofan engine nacelle (22) of any preceding claim, wherein the internal duct wall (104) has an acoustic panel (118), the step (112A) being located between the inlet edge (102) and the acoustic panel (118).

9. The turbofan engine nacelle (22) of any preceding claim, wherein the step (112A) is formed in the duct wall (104).

10. The turbofan engine nacelle (22) of any preceding claim, further comprising another step (112B) formed in the skin (106), the other step (112B) delimiting a recessed portion of the skin (106), the recessed portion (114) of the skin (106) extending away from both the other step (112A) and the inlet edge (102).

11. The turbofan engine nacelle (22) of any preceding claim, wherein the inlet edge (102), skin (106) and duct are annular (104).

12. The turbofan engine nacelle (22) of any preceding claim, wherein the step (112B) is backward facing.

13. A method of operating a turbofan engine (10), the method including a flow of air circulating along a surface (115) of an inlet portion (20) of the turbofan engine (10), the flow of air drawing water droplets (113) along the surface (115) until the water droplets (113) reach an edge of a step (112A) leading to a recessed portion (114) of the surface (115), the flow of air separating the water droplets (113) from the surface (115) at the edge of the step (112A), wherein the step (112A) extends around an entire circumference of the inlet (20), and the step is formed by a junction between a D-duct (108) and adjacent sections of a nacelle (22), the method further comprising using a heater in the D-duct (108) to heat water, in solid or liquid phase, which comes in contact with the inlet portion (20).

14. The method of claim 13, wherein the method further comprises subjecting water in solid state to heating, and thereby transforming the water in solid state into the water droplets (113).

15. The method of claim 13 or 14, further comprising directing the detached water droplets (113) into a turbofan engine core main gas path or a bypass duct.

## Patentansprüche

1. Turbofan-Triebwerksgondel (22), die einen Einlass (20) umfasst, der dazu konfiguriert ist, mit einem Hauptgaspfad eines Turbofan-Triebwerkskerns fluidverbunden zu sein, wobei:
der Einlass (20) eine Einlasskante (102), die eine äußere Haut (106) mit einer inneren Kanalwand (104) verbindet, und eine Stufe (112A) aufweist, die in einer Fläche (115) von mindestens einem von der äußeren Haut (106) und der Kanalwand (104) gebildet ist, wobei die Stufe (112A) einen ersten Abschnitt (116) der Fläche (115) von einem zweiten Abschnitt (114) der Fläche (115) abgrenzt, wobei der zweite Abschnitt (114) der Fläche (115) relativ zu dem ersten Abschnitt (116) der Fläche (115) um die Höhe der Stufe (112A) vertieft ist;
der zweite Abschnitt (114) der Fläche (115) sich sowohl von der Stufe (112A) als auch von der Einlasskante (102) weg erstreckt;
der erste Abschnitt (116) der Fläche (115) sich zwischen der Einlasskante (102) und der Stufe (112A) erstreckt;
die Stufe (112A) sich um einen gesamten Umfang des Einlasses (20) herum erstreckt; **dadurch gekennzeichnet, dass**:
die Stufe durch eine Verbindungsstelle zwischen einem D-Kanal (108) und benachbarten Abschnitten der Gondel (22) gebildet ist; und
die Turbofan-Triebwerksgondel (22) ferner eine Heizvorrichtung innerhalb des D-Kanals (108) umfasst, wobei die Heizvorrichtung dazu konfiguriert ist, Wasser, in fester oder flüssiger Phase, zu erhitzen, das mit dem Einlass (20) in Kontakt kommt.

2. Turbofan-Triebwerksgondel (22) nach Anspruch 1, wobei die Höhe der Stufe (112A) normal zu der Fläche (115) gemessen zwischen 0,254 mm (0,010 Zoll) und 5,08 mm (0,200 Zoll) beträgt.

3. Turbofan-Triebwerksgondel (22) nach Anspruch 1 oder 2, wobei die Stufe (112A) eine Setzstufe aufweist.

4. Turbofan-Triebwerksgondel (22) nach einem der vorhergehenden Ansprüche, wobei die Kanalwand (104) eine äußere Umgehungskanalwand ist.

5. Turbofan-Triebwerksgondel (22) nach einem der vorhergehenden Ansprüche, wobei der D-Kanal (108) die Haut (106) und die Kanalwand (104) verbindet.

6. Turbofan-Triebwerksgondel (22) nach Anspruch 5, wobei die Stufe (112A) an einer Verbindungsstelle zwischen dem D-Kanal (108) und der Kanalwand (104) gebildet ist.

7. Turbofan-Triebwerksgondel (22) nach Anspruch 4 oder 5, wobei die Heizvorrichtung eine Heizluftleitung (110) ist, die innerhalb des D-Kanals (108) bereitgestellt ist, wobei die Heizluftleitung (110) eine Vielzahl von Heizluftauslässen aufweist und mit einer Kompressorzapfluftquelle verbunden ist.

8. Turbofan-Triebwerksgondel (22) nach einem der vorhergehenden Ansprüche, wobei die innere Kanalwand (104) eine Akustikplatte (118) aufweist, wobei die Stufe (112A) sich zwischen der Einlasskante (102) und der Akustikplatte (118) befindet.

9. Turbofan-Triebwerksgondel (22) nach einem der vorhergehenden Ansprüche, wobei die Stufe (112A) in der Kanalwand (104) gebildet ist.

10. Turbofan-Triebwerksgondel (22) nach einem der vorhergehenden Ansprüche, ferner umfassend eine andere Stufe (112B), die in der Haut (106) gebildet ist, wobei die andere Stufe (112B) einen vertieften Abschnitt der Haut (106) begrenzt, wobei der vertiefte Abschnitt (114) der Haut (106) sich sowohl von der anderen Stufe (112A) als auch von der Einlasskante (102) weg erstreckt.

11. Turbofan-Triebwerksgondel (22) nach einem der vorhergehenden Ansprüche, wobei die Einlasskante (102), die Haut (106) und der Kanal ringförmig (104) sind.

12. Turbofan-Triebwerksgondel (22) nach einem der vorhergehenden Ansprüche, wobei die Stufe (112B) nach hinten weist.

13. Verfahren zum Betreiben eines Turbofan-Triebwerks (10), wobei das Verfahren umfasst, dass ein Luftstrom entlang einer Fläche (115) eines Einlassabschnitts (20) des Turbofan-Triebwerks (10) zirkuliert, wobei der Luftstrom Wassertropfen (113) entlang der Fläche (115) zieht, bis die Wassertropfen (113) eine Kante einer Stufe (112A) erreichen, die zu einem vertieften Abschnitt (114) der Fläche (115) führt, wobei der Luftstrom die Wassertropfen (113) an der Kante der Stufe (112A) von der Fläche (115) trennt, wobei die Stufe (112A) sich um einen gesamten Umfang des Einlasses (20) herum erstreckt und die Stufe durch eine Verbindungsstelle zwischen einem D-Kanal (108) und benachbarten Abschnitten einer Gondel (22) gebildet ist, wobei das Verfahren ferner Verwenden einer Heizvorrichtung in dem D-Kanal (108) umfasst, um Wasser, in fester oder flüssiger Phase, zu erhitzen, das mit dem Einlassabschnitt (20) in Kontakt kommt.

14. Verfahren nach Anspruch 13, wobei das Verfahren ferner umfasst, das Wasser in festem Zustand einem Erhitzen zu unterziehen, und dadurch das Wasser in festem Zustand in die Wassertropfen (113) umzuwandeln.

15. Verfahren nach Anspruch 13 oder 14, ferner umfassend Leiten der abgelösten Wassertropfen (113) in einen Hauptgaspfad eines Turbofan-Triebwerkskerns oder einen Umgehungskanal.

## Revendications

1. Nacelle de moteur à turbine à double flux (22) comprenant une entrée (20) configurée pour être reliée fluidiquement à un chemin de gaz principal d'un noyau de moteur à turbine à double flux, dans laquelle :
l'entrée (20) présente un bord d'entrée (102) reliant un revêtement externe (106) à une paroi de conduit interne (104), et une marche (112A) formée dans une surface (115) d'au moins un des revêtements externes (106) et la paroi du conduit (104), la marche (112A) délimitant une première partie (116) de la surface (115) à partir d'une seconde partie (114) de la surface (115), la seconde partie (114) de la surface (115) étant en retrait par rapport à la première partie (116) de la surface (115) de la hauteur de la marche (112A) ;
la seconde partie (114) de la surface (115) s'étend à la fois depuis la marche (112A) et le bord d'entrée (102) ;
la première partie (116) de la surface (115) s'étend entre le bord d'entrée (102) et la marche (112A) ;
la marche (112A) s'étend sur toute une circonférence de l'entrée (20) ; **caractérisée en ce que** :
la marche est formée par une jonction entre un conduit en D (108) et des sections adjacentes de la nacelle (22) ; et
la nacelle du moteur à turbine à double flux (22) comprend également un réchauffeur interne au conduit en D (108), le réchauffeur étant configuré pour chauffer l'eau, en phase solide ou liquide, qui entre en contact avec l'entrée (20).

2. Nacelle de moteur à turbine à double flux (22) selon la revendication 1, dans laquelle la hauteur de la marche (112A) est comprise entre 0,254 mm (0,010") et 5,08 mm (0,200") mesurée perpendiculairement à la surface (115).

3. Nacelle de moteur à turbine à double flux (22) selon la revendication 1 ou 2, dans laquelle la marche (112A) présente une contremarche.

4. Nacelle de moteur à turbine à double flux (22) selon une quelconque revendication précédente, dans laquelle la paroi de conduit (104) est une paroi de conduit de dérivation externe.

5. Nacelle de moteur à turbine à double flux (22) selon une quelconque revendication précédente, dans laquelle le conduit en D (108) relie le revêtement (106) et la paroi du conduit (104) .

6. Nacelle de moteur à turbine à double flux (22) selon la revendication 5, dans laquelle la marche (112A) est formée à une jonction entre le conduit en D (108) et la paroi du conduit (104).

7. Nacelle de moteur à turbine à double flux (22) selon la revendication 4 ou 5, dans laquelle le réchauffeur est un conduit d'air de chauffage (110) prévu à l'intérieur du conduit en D (108), le conduit d'air de chauffage (110) ayant une pluralité de sorties d'air de chauffage, et étant relié à une source d'air de prélèvement de compresseur.

8. Nacelle de moteur à turbine à double flux (22) selon une quelconque revendication précédente, dans laquelle la paroi de conduit interne (104) présente un panneau acoustique (118), la marche (112A) étant située entre le bord d'entrée (102) et le panneau acoustique (118).

9. Nacelle de moteur à turbine à double flux (22) selon une quelconque revendication précédente, dans laquelle la marche (112A) est formée dans la paroi du conduit (104).

10. Nacelle de moteur à turbine à double flux (22) selon une quelconque revendication précédente, comprenant également une autre marche (112B) formée dans le revêtement (106), l'autre marche (112B) délimitant une partie évidée du revêtement (106), la partie évidée (114) du revêtement (106) s'étendant à la fois depuis l'autre marche (112A) et le bord d'entrée (102) .

11. Nacelle de moteur à turbine à double flux (22) selon une quelconque revendication précédente, dans laquelle le bord d'entrée (102), le revêtement (106) et le conduit sont annulaires (104).

12. Nacelle de moteur à turbine à double flux (22) selon une quelconque revendication précédente, dans laquelle la marche (112B) est tournée vers l'arrière.

13. Procédé de fonctionnement d'un moteur à turbine à double flux (10), le procédé comportant un flux d'air circulant le long d'une surface (115) d'une partie d'entrée (20) du moteur à turbine à double flux (10), le flux d'air aspirant des gouttelettes d'eau (113) le long de la surface (115) jusqu'à ce que les gouttelettes d'eau (113) atteignent un bord d'une marche (112A) menant à une partie évidée (114) de la surface (115), le flux d'air séparant les gouttelettes d'eau (113) de la surface (115) au bord de la marche (112A), dans laquelle la marche (112A) s'étend sur toute la circonférence de l'entrée (20), et la marche est formée par une jonction entre un conduit en D (108) et des sections adjacentes d'une nacelle (22), le procédé comprenant également l'utilisation d'un réchauffeur dans le conduit en D (108) pour chauffer l'eau, en phase solide ou liquide, qui entre en contact avec la partie d'entrée (20).

14. Procédé selon la revendication 13, dans lequel le procédé comprend également le fait de soumettre de l'eau à l'état solide à un chauffage, et de transformer ainsi l'eau à l'état solide en gouttelettes d'eau (113).

15. Procédé selon la revendication 13 ou 14, comprenant également le fait de diriger les gouttelettes d'eau détachées (113) vers un chemin de gaz principal du noyau d'un moteur à turbine à double flux ou un conduit de dérivation.
